# EUROPÄISCHE PATENTSCHRIFT

(11) **EP 3 145 737 B1**
(45) Veröffentlichungstag und Bekanntmachung des Hinweises auf die Patenterteilung: **07.07.2021**
(21) Anmeldenummer: 14727162.1
(22) Anmeldetag: 22.05.2014
(51) Int. Cl.: B60G 17/017, B60G 17/015

(54) **VERFAHREN ZUR NIVEAUREGELUNG EINES LUFTGEFEDERTEN KRAFTFAHRZEUGS**
METHOD FOR LEVEL CONTROL OF A MOTOR VEHICLE WITH AIR SUSPENSION
PROCEDE DE REGULATION DE NIVEAU POUR UN VEHICULE À SUSPENSION PNEUMATIQUE

(43) Veröffentlichungstag der Anmeldung: 29.03.2017
(73) Patentinhaber: ZF CV Systems Hannover GmbH, 30453 Hannover (DE)
(72) Erfinder: ALBERS, Jürgen, 31582 Nienburg (DE); BARTEL, Siegfried, 30890 Barsinghausen (DE); GOCZ, Reinhard, 30926 Seelze (DE); JOVERS, Ingo, 30989 Gehrden (DE); LENTZ, Uwe, 31535 Neustadt (DE)
(74) Vertreter: Rabe, Dirk-Heinrich
(86) Internationale Anmeldenummer: PCT/EP2014/001377
(87) Internationale Veröffentlichungsnummer: WO 2015/176731

(56) Entgegenhaltungen:
- EP-A1- 1 925 471
- EP-A2- 0 779 166
- DE-A1- 19 524 730
- DE-A1- 19 539 887
- DE-A1- 19 821 305
- DE-A1-102012 006 468
- DE-C2- 4 042 490
- US-A- 4 948 166
- US-A- 5 083 275

## Beschreibung

Die Erfindung betrifft ein Verfahren zur Niveauregelung eines luftgefederten Kraftfahrzeugs, beispielsweise eines Omnibusses, das eine luftgefederte Vorderachse und mindestens eine luftgefederte Hinterachse aufweist, und bei dem mehrere zwischen Fahrwerkselementen der Fahrzeugachsen und dem Fahrzeugaufbau angeordnete Luftfederbälge zur Regelung eines vorgegebenen Soll-Niveaus über als Schaltventile ausgebildete Niveauregelventile jeweils beim Unterschreiten einer unteren Toleranzgrenze eines Toleranzbandes belüftet und beim Überschreiten einer oberen Toleranzgrenze des Toleranzbandes entlüftet werden, wobei beim Vorliegen eines bestimmten Betriebszustandes zumindest eine der beiden Toleranzgrenzen für zumindest einen Luftfederbalg mindestens einer Fahrzeugachse oder einer Fahrzeugseite in geeigneter Weise verändert wird.

Luftfederungsanlagen weisen gegenüber konventionellen Stahlfederungen wesentliche Vorteile auf und kommen daher zunehmend sowohl bei Nutzfahrzeugen, wie Lastkraftwagen und Omnibussen, als auch bei vorzugsweise schweren Personenkraftfahrzeugen, wie Oberklasselimousinen und Geländefahrzeugen, zur Anwendung. So ermöglicht eine Luftfederungsanlage eine beladungsunabhängige Niveauregelung, da der aktuelle Beladungszustand jeweils durch eine Anpassung des Balgdruckes in den Luftfederbälgen ausgeglichen werden kann. Ebenso bietet eine Luftfederungsanlage aufgrund der progressiven Federkennlinien der Luftfedern einen besonders sicheren Fahrbahnkontakt der Räder und ein komfortables Ansprechverhalten beim Aus- und Einfedern der Räder. Ein weiterer Vorteil von Luftfederungsanlagen besteht darin, dass die Bodenfreiheit der betreffenden Fahrzeuge bedarfsweise verändert werden kann, beispielsweise für einen Offroad-Einsatz erhöht und für eine Schnellfahrt auf der Autobahn verringert werden kann. Bei Nutzfahrzeugen kommt hinzu, dass der Fahrzeugaufbau zum Be- und Entladen abgesenkt oder auf eine geeignete Höhe eingestellt werden kann. So kann beispielsweise der Fahrzeugrahmen eines luftgefederten Lastkraftwagens oder Anhängers zum Absetzen einer Wechselpritsche abgesenkt und zu deren Aufnahme wieder angehoben werden. Ebenso kann der Ladeboden eines Lastkraftwagens zur Erleichterung des Be- und Entladens durch Absenken oder Erhöhen des Balgdruckes an der Hinterachse auf das Niveau einer Laderampe eingestellt werden. Bei luftgefederten Omnibussen kann der Fahrzeugaufbau zur Erleichterung des Ein- und Aussteigens der Fahrgäste durch Ablassen der Druckluft aus den fahrbahnäußeren Federbälgen einseitig abgesenkt und anschließend durch eine Befüllung der Federbälge wieder angehoben werden. Diese Funktion ist auch als kneeling oder easy entry bekannt.

Zur Niveauregelung eines entsprechenden Kraftfahrzeugs mittels Wegsensoren, die beidseitig jeweils zwischen den Fahrzeugachsen oder Aufhängungselementen der Fahrzeugachsen und dem Fahrzeugaufbau angeordnet sind, wird das jeweilige
Ist-Niveau des Fahrzeugaufbaus in Bezug zur Fahrzeugachse erfasst und in einem Steuergerät mit dem vorgegebenen sowie dort abgespeicherten Soll-Niveau verglichen. Wenn die jeweils einem der beidseitig an den Fahrzeugachsen angeordneten Luftfederbälge zugeordneten Niveauregelventile, wie vorliegend vorgesehen, als Schaltventile, genauer gesagt als 2/2-Wege-Schaltventile ausgebildet sind, erfolgt die Niveauregelung bekanntlich dadurch, dass der betreffende Luftfederbalg bei Unterschreiten einer unteren Soll-Niveau-Toleranzgrenze durch das Öffnen des zugeordneten Niveauregelventils mit einer druckführenden Hauptleitung verbunden und dadurch belüftet wird, sowie bei Überschreiten einer oberen Soll-Niveau-Toleranzgrenze durch das Öffnen des zugeordneten Niveauregeventils mit der dann drucklosen Hauptleitung verbunden und dadurch entlüftet wird. Damit die Hauptleitung, wie es gerade erforderlich ist, druckführend oder drucklos ist, wird diese jeweils zuvor, beispielsweise über ein als ein 3/2-Wege-Schaltventil ausgebildetes Hauptschaltventil, mit einer Druckluftquelle, wie zum Beispiel einem Druckspeicher oder der Druckleitung eines Kompressors, oder mit einer Druckluftsenke, wie beispielsweise einer über einen Schalldämpfer mit der Umgebung verbundenen Drucklosleitung verbunden. Durch die Berücksichtigung der beiden Soll-Niveau-Toleranzgrenzen wird vermieden, dass die Luftfederbälge bei der geringsten Abweichung zwischen dem jeweiligen Ist-Niveau und dem vorgegebenen Soll-Niveau wechselweise belüftet oder entlüftet werden, was für die Fahrzeuginsassen komfortmindernd und zudem mit einem erhöhten Druckluftverbrauch verbunden wäre. Der Aufbau einer entsprechenden Luftfederungsanlage und die Funktionsweise einer derartigen Niveauregelung ist beispielsweise der EP 0 779 166 B1 beschrieben.

Die genannten Toleranzgrenzen für eine erlaubte Abweichung des Ist-Niveaus vom Soll-Niveau sind üblicherweise fahrzeugspezifisch festgelegt und stellen einen Kompromiss zwischen einem sicheren Fahrverhalten und einem hohen Fahrkomfort dar. Es ist jedoch auch möglich, diese Toleranzgrenzen bei Auftreten bestimmter Betriebszustände in geeigneter Weise abzuändern.

So ist beispielsweise in der DE 195 39 887 B4 ein Verfahren zur Niveauregelung eines luftgefederten Kraftfahrzeugs, insbesondere eines Lastkraftwagens beschrieben, bei dem entweder eine Zeitverzögerung in der Niveauregelung aktiviert oder durch das Anheben der oberen Toleranzgrenze und das Absenken der unteren Toleranzgrenze das Regelungs-Totband der Niveauregelung vergrößert wird, wenn das Kraftfahrzeug nicht bewegt werden kann. Hierdurch soll durch zeitweiliges Ausschalten der Niveauregelung verhindert werden, dass während eines Ladevorgangs an einer Fahrzeugachse kurzfristig auftretende Abweichungen des Ist-Niveaus vom Soll-Niveau, die beispielsweise von der Auf- und Abfahrt eines relativ schweren Gabelstaplers auf die oder von der Ladefläche verursacht werden können, korrigiert werden. Der betreffende Betriebszustand des Kraftfahrzeugs kann anhand des abgestellten Antriebsmotors ermittelt werden.

Aus der EP 0 779 166 B1 ist ein Verfahren zur Niveauregelung eines luftgefederten Kraftfahrzeugs bekannt, bei dem beim Auftreten einer Schiefstellung des Fahrzeugaufbaus an einer Fahrzeugachse die Korrektur der Schiefstellung gegebenenfalls abgebrochen wird. Die Korrektur der Schiefstellung erfordert das Belüften der Luftfeder(n) auf der Seite des abgesenkten Fahrzeugaufbaus und das Entlüften der Luftfeder(n) auf der Seite des angehobenen Fahrzeugaufbaus. Da dies durch wechselseitiges Umschalten der Verbindung der Hauptleitung mit der Druckluftquelle und der Druckluftsenke erfolgt, ist vorgesehen, dass die Anzahl der entgegengesetzten Regelspiele erfasst und bewertet wird. Bei Überschreiten einer vorgegebenen Anzahl entgegengesetzter Regelspiele werden die Soll-Niveaus der betreffenden Fahrzeugachse(n) unter entsprechender Verschiebung der jeweiligen oberen und unteren Toleranzgrenzen gleich den aktuellen Ist-Niveaus gesetzt. Hierdurch soll die Überschreitung einer maximalen Druckdifferenz in den Luftfedern einer Fahrzeugachse und die Unterschreitung eines Mindestdruckes in einer der Luftfedern ohne die Verwendung von Drucksensoren vermieden werden.

Außerdem ist in der EP 1 925 471 B1 ein Verfahren zur Niveauregelung eines luftgefederten Kraftfahrzeugs beschrieben, bei dem während der Fahrt die Querbeschleunigung des Kraftfahrzeugs erfasst und die Soll-Niveau-Toleranzgrenzen der kurveninneren sowie kurvenäußeren Luftfedern in Abhängigkeit von der Querbeschleunigung unterschiedlich verändert werden. So ist nach diesem Verfahren vorgesehen, dass die obere Toleranzgrenze der kurveninneren Luftfederbälge mit zunehmender Querbeschleunigung weiter angehoben wird als bei den kurvenäußeren Luftfederbälgen, und dass die untere Toleranzgrenze der kurvenäußeren Luftfederbälge mit zunehmender Querbeschleunigung weiter abgesenkt wird als bei den kurveninneren Luftfederbälgen. Durch die asymmetrische Verschiebung der Toleranzgrenzen für die Luftfedern einer Fahrzeugachse wird einer Querneigung des Fahrzeugaufbaus entgegengewirkt und entgegengerichtete Regelvorgänge vermieden.

Schließlich ist bei dem aus der DE 10 2012 006 468 A1 bekannten Niveauregelungsverfahren für einen Omnibus zur Vermeidung von Höhenschwankungen an den Trittschwellen der Einstiegstüren beim Ein- und Aussteigen von Fahrgästen vorgesehen, dass zunächst die Fahrgeschwindigkeit und/oder der Betätigungszustand einer Feststellbremse und der Schließzustand der Einstiegstüren sensorisch erfasst werden, und dass zumindest eine von zwei Soll-Niveau-Toleranzgrenzen der an mindestens einer Fahrzeugachse oder an einer Fahrzeugseite angeordneten Luftfederbälge dann, wenn die Fahrgeschwindigkeit eine Mindestfahrgeschwindigkeit unterschritten hat und/oder die Feststellbremse betätigt ist, und wenn mindestens eine der Einstiegstüren geöffnet ist, dadurch verändert wird, dass die obere Toleranzgrenze auf eine korrigierte obere Toleranzgrenze abgesenkt wird, die zwischen dem Soll-Niveau und der vorherigen oberen Toleranzgrenze liegt, und/oder dass die untere Toleranzgrenze auf eine korrigierte untere Toleranzgrenze angehoben wird, die zwischen dem Soll-Niveau und der vorherigen unteren Toleranzgrenze liegt.

In der US 5 083 275 ist ein Höhensteuerungs- und/oder -regelsystem für ein Luftfederungssystem für ein Fahrzeug offenbart. Das System weist eine erste Zielhöhe auf, die während einer Fahrt des Fahrzeugs Anwendung finden soll und die variabel ist abhängig von einer Fahrzeuggeschwindigkeit, einem Zustand einer Straßenoberfläche und/oder einer Stellung eines Zündschalters. Das System weist außerdem eine zweite Zielhöhe auf, die bei einem Stillstand des Fahrzeugs Anwendung finden soll. Das System weist außerdem Steuerungs- und/oder Regelmittel auf, die einen akzeptablen Bereich vorgeben, innerhalb dessen eine Fahrzeughöhe abhängig von einem Fahrzeugzustand zu jedem gegebenen Zeitpunkt von der jeweiligen Zielhöhe abweichen darf.

Im Betrieb eines Fahrzeugs kann es vorkommen, dass dieses an einem Ort zum Stillstand kommt, bei dem beispielsweise das rechte Vorderrad in einem Schlagloch oder einer anderen Fahrwegvertiefung steht, während alle anderen Fahrzeugräder auf einer Ebene stehen. In dieser Situation liefert der Wegsensor am rechten Vorderrad einem Steuergerät des Niveauregelungssystems einen Abstandswert oder Ist-Niveau, der im Vergleich zu Abstandswerten bzw. Ist-Niveaus an den übrigen Fahrzeugrädern größer ist und eine Toleranzgrenze überschreitet. Daraus kann das Steuergerät bei einer konventionellen Betriebsweise die Schlussfolgerung ziehen, dass das rechte Vorderrad in einem Schlagloch oder ähnlichem steht, so dass das Steuergerät aufgrund eines dort abgespeicherten Regelungsprogramms beschließt, diesen Zustand zu korrigieren. Hierzu wird nach einer gewählten Strategie Druckluft in Luftfederbälge geleitet und gegebenenfalls andere Luftfederbälge entlüftet. Anschließend wird gemessen, ob sich die Ist-Niveauwerte der einzelnen Radpositionen wieder innerhalb der Grenzen eines Toleranzbandes um einen Soll-Niveauwert befinden, sich also in vorbestimmter Weise dem Soll-Niveau angenähert haben. Sollte sich das Ergebnis dieser Regelung verschlechtert haben, werden aufgrund der ermittelten neuen Abstands- bzw. Ist-Niveauwerte der Wegsensoren an den unterschiedlichen Radpositionen die Luftfederbälge des Fahrzeugs auf andere Weise entlüftet beziehungsweise mit zusätzlicher Druckluft befüllt. Dieser Regelvorgang kann unkomfortabel lange andauern und vergleichsweise viele Schaltventilbetätigungen im Niveauregelungssystem benötigen, wodurch die gesamte Gebrauchsdauer solcher Schaltventile über einen insgesamt vergleichsweise kurzen Zeitraum genutzt wird.

Der Erfindung liegt daher die Aufgabe zugrunde, ein Verfahren zur Niveauregelung eines luftgefederten Kraftfahrzeugs der eingangs genannten Art, beispielsweise eines Omnibusses, vorzustellen, mit dem dessen Regelverhalten verbessert wird. So soll die Regelungsdauer zumindest in solchen Betriebssituationen reduziert werden, in denen mindestens ein Fahrzeugrad in einer Fahrwegvertiefung oder auf einer Fahrwegserhöhung steht.

Diese Aufgabe ist durch ein Verfahren mit den Merkmalen des Hauptanspruchs gelöst. Vorteilhafte Ausgestaltungen und Weiterbildungen dieses Verfahrens sind Gegenstand der Unteransprüche.

Die Erfindung geht demnach aus von einem Verfahren zur Niveauregelung eines luftgefederten Kraftfahrzeugs, beispielsweise eines Omnibusses, das eine luftgefederte Vorderachse und mindestens eine luftgefederte Hinterachse aufweist, und bei dem mehrere zwischen Fahrwerkselementen der Fahrzeugachsen und dem Fahrzeugaufbau angeordnete Luftfederbälge zur Regelung ihres Ist-Niveaus xᵢₛₜ auf ein vorgegebenes Soll-Niveau xₛₒₗₗ über als Schaltventile ausgebildete Niveauregelventile jeweils beim Unterschreiten einer unteren Toleranzgrenze x_{T_u} eines Toleranzbandes ΔxT belüftet und beim Überschreiten einer oberen Toleranzgrenze x_{T_o} des Toleranzbandes ΔxT entlüftet werden, wobei beim Vorliegen eines bestimmten Betriebszustandes zumindest eine der beiden Toleranzgrenzen x_{T_u}, x_{T_o} für zumindest einen Luftfederbalg mindestens einer Fahrzeugachse oder einer Fahrzeugseite in geeigneter Weise verändert wird.

Zur Reduzierung der Regelungsdauer zumindest in solchen Betriebssituationen, in denen mindestens ein Fahrzeugrad in einer Fahrwegvertiefung oder auf einer Fahrwegserhöhung steht, ist vorgesehen, dass die Fahrgeschwindigkeit und/oder der Betätigungszustand einer Feststellbremse sensorisch erfasst werden, dass dann, wenn die Fahrgeschwindigkeit eine als Fahrzeugstillstand interpretierbare Mindestfahrgeschwindigkeit unterschritten hat und/oder die Feststellbremse betätigt ist, im Bereich eines jeden Luftfederbalgs das Ist-Niveau gemessen wird, dass die Messwerte der Ist-Niveaus mit dem vorgegebenen Wert für das Soll-Niveau verglichen werden, dass derjenige Ist-Niveauwert eines Luftfederbalgs ermittelt wird, der die größte Abweichung zum Soll-Niveau aufweist, und dass für denjenigen Luftfederbalg, an dem die größte Abweichung des Ist-Niveaus zum Soll-Niveau festgestellt wurde, die obere Soll-Niveau-Toleranzgrenze auf eine korrigierte obere Toleranzgrenze erhöht wird und/oder die untere Soll-Niveau-Toleranzgrenze auf eine korrigierte untere Toleranzgrenze abgesenkt wird.

Somit wird die Breite des Toleranzbandes um das Soll-Niveau vergrößert, welche durch den Abstand zwischen der unteren Soll-Niveau-Toleranzgrenze und der oberen Soll-Niveau-Toleranzgrenze gegeben ist, und innerhalb der eine Abweichung des Ist-Niveaus von dem Soll-Niveau regelungstechnisch nicht korrigiert wird. Hierdurch werden durch die Niveauregelung im Vergleich zum normalen Fahrbetrieb auch größere Abweichungen des Ist-Niveaus von dem Soll-Niveau nicht ändert.

Der betreffende Betriebszustand wird dadurch erkannt, dass die Fahrgeschwindigkeit eine als Fahrzeugstillstand interpretierbare Mindestfahrgeschwindigkeit unterschritten hat und/oder die Feststellbremse betätigt ist. Die entsprechende Veränderung der Toleranzgrenzen der betreffenden Luftfederbälge ist auf einfache Weise durch den vorübergehenden Ersatz der entsprechenden Werte für den normalen Fahrbetrieb durch neue Werte innerhalb des elektronischen Steuergerätes der Luftfederungsanlage realisierbar.

Das vorgeschlagene Regelungsverfahren verursacht in einem Niveauregelungssystem quasi eine Beruhigung des Regelverhaltens, denn dadurch, dass die ursprüngliche obere Soll-Niveau-Toleranzgrenze erhöht wird und/oder die ursprüngliche untere Soll-Niveau-Toleranzgrenze abgesenkt wird, wird eine Regelungstätigkeit in solchen Fällen vermieden, in denen nur ein Fahrzeugrad beim Fahrzeugstillstand in einer Fahrwegvertiefung oder auf einer Fahrwegserhöhung steht. Das in einer solchen Situation das Niveauregelungssystem regelungstechnisch sozusagen inaktiv bleibt, erzeugt keine Nachteile, weil das Fahrzeug dann, wenn beispielsweise ein Rad in einer Fahrwegvertiefung steht, es durch die verbliebenen mindestens drei Fahrzeugräder in einer vergleichsweise stabilen Lage steht, die üblicherweise auch ein zur Fahrbahn weitgehend paralleles Niveau aufweist. Das in der Fahrwegvertiefung stehende Rad ist dann allerdings weniger belastet und die anderen Räder sind dann anteilig höher belastet, welches aber nicht als nachteilig beurteil wird. In einer Betriebssituation, bei der ein Fahrzeugrad auf einer Fahrwegserhöhung steht, gibt es mindestens zwei weitere Fahrzeugräder, die ein stabiles und in Bezug zur Fahrbahn vergleichsweise paralleles Niveau des Fahrzeugaufbaus gewährleisten. Zumindest ein viertes Fahrzeugrad, welches auf der gleichen Fahrzeugseite wie das auf der Fahrwegserhöhung stehende Fahrzeugrad angeordnet ist, wird dabei weniger belastet und die wenigstens drei tragenden Fahrzeugräder anteilig höher belastet sein. Auch dies wird nicht als nachteilig beurteilt. In jeder der beschriebenen Betriebssituationen ist der Fahrzeugaufbau jedenfalls kippstabil sowie in Bezug zum Fahrweg weitgehend parallel ausgerichtet.

Durch die Nutzung des Verfahrens gemäß der Erfindung kann in einem Niveauregelungssystem Bauraum und Herstellkosten einsparend auf eine schaltbare Drossel verzichtet werden, welche in konventionellen Niveauregelungssystemen eine schaltbare Verbindung mit geringem Querschnitt für Druckluft zwischen dem Luftfederbalg des rechten Vorderrades und dem Luftfederbalg des linken Vorderrades bildet. Eine solche Drossel wird in konventionellen Niveauregelungssystemen auch dazu verwendet, um in den beschriebenen Betriebssituationen, bei denen ein Vorderrad in einer Fahrwegvertiefung oder auf einer Fahrwegserhöhung steht, einen Druckluftaustausch zwischen den Luftfederbälgen der Vorderachse zu ermöglichen.

Bei demjenigen Luftfederbalg, bei dem eine obere Toleranzgrenze und/oder eine untere Toleranzgrenze auf eine obere und/oder untere korrigierte Toleranzgrenzen geändert wurde, wird bei einem Überschreiten dieser korrigierten oberen oder unteren Toleranzgrenze das Ist-Niveau auf einen Wert zurück geregelt, der innerhalb des korrigierten und damit vergrößerten Toleranzbandes für diesen Luftfederbalg liegt, jedoch außerhalb des unkorrigierten Toleranzbandes liegt.

Hierdurch wird erreicht, dass an dem betroffenen Luftfederbalg eine Niveauregelung erst dann stattfindet, wenn die korrigierten Toleranzgrenzen des aufgeweiteten Toleranzbandes überschritten oder unterschritten werden, wobei die Rückregelung das Ist-Niveau erneut in einen Bereich führt, der innerhalb der Grenzen des korrigierten Toleranzbandes liegt. Dadurch weicht das Ist-Niveau an diesem Luftfederbalg zunächst zwar vergleichsweise stark von dem Soll-Niveau ab, das Niveauregelungssystem wird hinsichtlich seiner Berechnung-, Regelungs- und/oder Steuerungstätigkeit jedoch beruhigt.

In nicht beanspruchter Weise kann vorgesehen sein, dass bei demjenigen Luftfederbalg, bei dem eine obere Toleranzgrenze und/oder eine untere Toleranzgrenze auf eine obere und/oder untere korrigierte Toleranzgrenzen geändert wurde, bei einem Überschreiten dieser korrigierten oberen und/oder unteren Toleranzgrenze das Ist-Niveau auf einen Wert zurück geregelt wird, der innerhalb des unkorrigierten Toleranzbandes für diesen Luftfederbalg liegt.

Hierdurch wird erreicht, dass an dem betroffenen Luftfederbalg eine Niveauregelung stattfindet, wenn die korrigierten Toleranzgrenzen des aufgeweiteten Toleranzbandes überschritten oder unterschritten werden, wobei die Rückregelung das Ist-Niveau in einen Bereich führt, der innerhalb der Grenzen des unkorrigierten Toleranzbandes liegt, und somit der erfindungsgemäße Verfahrensablauf von einer neuen Ausgangsposition erneut stattfinden kann.

Sofern das Verfahren gemäß der Erfindung bei einem Omnibus mit wenigstens einer Fahrzeugtür genutzt wird, kann vorgesehen sein, dass bei geöffneter Fahrzeugtür nicht der dieser Fahrzeugtür nahe Luftfederbalg korrigierte Toleranzgrenzen zugewiesen bekommt, obwohl an diesem ein Ist-Niveauwert ermittelt wurde, der außerhalb der Grenzen des unkorrigierten Toleranzbandes liegt, sondern derjenige Luftfederbalg, welcher an der gleichen Fahrzeugachse an der gegenüberliegenden Fahrzeugseite angeordnet ist.

Zwar befindet sich in einer solchen Betriebssituation das türnahe Fahrzeugrad in einer Fahrbahnvertiefung, da aber durch die benachbarte Fahrzeugtür Personen den Bus besteigen oder verlassen werden, wird an dem diesem Fahrzeugrad zugeordneten Luftfederbalg eine genaue Einstellung des Niveaus bevorzugt. Die vergleichsweise ungenaue Einstellung des Luftfederbalgs soll dann an der gegenüber liegenden Fahrzeugseite der gleichen Fahrzeugachse vorhanden sein.

Weiter kann das Verfahren bei einem Omnibus mit wenigstens einer Fahrzeugtür so durchgeführt werden, dass bei geöffneter Fahrzeugtür nicht der dieser Fahrzeugtür nahe Luftfederbalg korrigierte Toleranzgrenzen zugewiesen bekommt, obwohl an diesem ein Ist-Niveauwert ermittelt wurde, der außerhalb der Grenzen des unkorrigierten Toleranzbandes liegt, sondern derjenige Luftfederbalg, welcher an der anderen Fahrzeugachse an der gegenüberliegenden Fahrzeugseite, also diagonal gegenüber, angeordnet ist. An dem Luftfederbalg im Bereich der Fahrzeugtür wird dadurch eine genaue Niveauregelung innerhalb der unkorrigierten Toleranzgrenzen durchgeführt, jedoch am diagonal gegenüber liegenden Luftfederbalg, also am Fahrzeug hinten und einstiegstürfern, wird eine größere Abweichung des Ist-Niveaus vom Soll- Niveau hingenommen.

Gemäß einer weiteren Variante kann vorgesehen sein, dass bei geöffneter Fahrzeugtür nicht der dieser Fahrzeugtür nahe Luftfederbalg korrigierte Toleranzgrenzen zugewiesen bekommt, obwohl an diesem ein Ist-Niveauwert ermittelt wurde, der außerhalb der Grenzen des unkorrigierten Toleranzbandes liegt, sondern alle diejenigen Luftfederbälge, welche an der gegenüberliegenden Fahrzeugseite angeordnet sind. Auch hierdurch wird an dem Luftfederbalg im Bereich der Fahrzeugtür eine genaue Niveauregelung innerhalb der unkorrigierten Toleranzgrenzen durchgeführt, während an allen anderen Luftfederbälgen eine größere Abweichung des Ist-Niveaus vom Soll-Niveau hingenommen wird.

Eine andere Ausführungsform des Verfahrens sieht vor, dass die betreffenden oberen und/oder unteren korrigierten Toleranzgrenzen für den zu der Fahrzeugtür nahe angeordneten Luftfederbalg auf die oberen und/oder unteren unkorrigierten Toleranzgrenzen zurückversetzt werden. Ein solches Zurücksetzen der Toleranzgrenzen auf die Grenzen eines unkorrigierten und dadurch schmaleren Toleranzbandes erfolgt spätestens dann, wenn festgestellt wurde, dass das Fahrzeug eine bestimmte, geringe Fahrgeschwindigkeit überschritten hat.

Insbesondere wird es bevorzugt, dass das Zurücksetzen auf die oberen und/oder unteren unkorrigierten Toleranzgrenzen für den zu der Fahrzeugtür nahe angeordneten Luftfederbalg erfolgt, bevor eine Regelung des Fahrzeugniveaus stattfindet.

Weil die von den Fahrgästen gegebenenfalls als störend wahrgenommenen Höhenschwankungen der Trittschwelle erfahrungsgemäß nur beim Ein-und Aussteigen über die vordere Einstiegstür auftreten, ist es möglich, dass die betreffenden Toleranzgrenzen der an der Vorderachse angeordneten Luftfederbälge nur dann gemäß der Erfindung verändert werden, wenn die vordere Einstiegstür auch tatsächlich geöffnet ist.

Außerdem kann vorgesehen sein, dass einem Luftfederbalg, dessen Ist-Niveau die obere oder untere unkorrigierte Toleranzgrenze überschreitet, die gleichen oberen und/oder unteren korrigierten Toleranzgrenzen zugewiesen werden, wie jedem anderen der Luftfederbälge des Fahrzeugs, wenn bei einem dieser anderen Luftfederbälge die obere oder untere unkorrigierte Toleranzgrenzen überschritten wird.

Alternativ dazu kann vorgesehen sein, dass einem Luftfederbalg, dessen Ist-Niveau die obere oder untere unkorrigierte Toleranzgrenze überschreitet, andere obere und/oder untere korrigierte Toleranzgrenzen zugewiesen werden als einem oder allen der anderen Luftfederbälgen des Fahrzeugs, wenn bei einem dieser anderen Luftfederbälge die obere oder untere unkorrigierte Toleranzgrenzen überschritten wird. Hierdurch ist die Berücksichtigung von fahrzeugspezifischen Besonderheiten sehr gut möglich,

Ebenfalls alternativ dazu kann vorgesehen sein, dass die obere und die untere unkorrigierte Toleranzgrenze an einem Luftfederbalg, ab deren Überschreiten diesem Luftfederbalg korrigierte obere und/oder untere Toleranzgrenzen zugewiesen werden, für alle Luftfederbälge gleich ist. Diese Variante bedeutet eine Gleichbehandlung aller Luftfederbälge beziehungsweise Radpositionen des Fahrzeugs.

Weiter kann vorgesehen sein, dass die obere und die untere unkorrigierte Toleranzgrenze an einem Luftfederbalg, ab deren Überschreiten diesem Luftfederbalg korrigierte obere und/oder untere Toleranzgrenzen zugewiesen werden, für alle oder einige Luftfederbälge unterschiedlich sind. Durch diese Maßnahme können auf fahrzeugspezifische Eigenarten besonders gut berücksichtigt werden.

Schließlich kann vorgesehen sein, dass der Wert diejenigen positiven oder negativen Abweichung des Ist-Niveaus vom Soll-Niveau, ab welchem dem zugehörigen Luftfederbalg eine korrigierte obere und/oder untere Toleranzgrenze zugewiesen wird, noch innerhalb des Wertebereichs der unkorrigierten Toleranzgrenzen liegt. Diese Vorgehensweise bedeutet, dass das Toleranzband hinsichtlich einer regelungstechnisch unwirksamen Abweichung des Ist-Niveaus vom Soll-Niveau in einem Steuergerät bereits vergrößert dann wird, wenn die aktuelle Abweichung des Ist-Niveaus vom Soll-Niveau noch innerhalb der erlaubten Grenzen des unkorrigierten Toleranzbandes liegt. Die sozusagen vorsorgliche Auslösung einer solchen Toleranzbandaufweitung kann beispielsweise das Erkennen eines kurz bevor stehenden Stopps eines Omnibusses an einer Haltestelle sein.

Zur weiteren Verdeutlichung der Erfindung ist der Beschreibung eine Zeichnung beigefügt. In dieser zeigt
Fig. 1 schematisch einen Fahrzeugaufbau und ein Fahrzeugrad, die sich an unterschiedlichen Fahrwegpositionen befinden,
Fig. 2 ein Diagramm, welches den Verlauf des Ist-Niveaus des Fahrzeugrades beziehungsweise Fahrzeugaufbaus gemäß Fig. 1 beim Durchfahren der Fahrstrecke zeigt,
Fig. 3 den schematischen Aufbau einer Steuerungseinrichtung der Luftfederungsanlage eines Kraftfahrzeugs zur Anwendung des erfindungsgemäßen Verfahrens, und
Fig. 4 eine schematische Darstellung eines Omnibusses mit zwei Fahrzeugachsen sowie zwei Einstiegstüren.

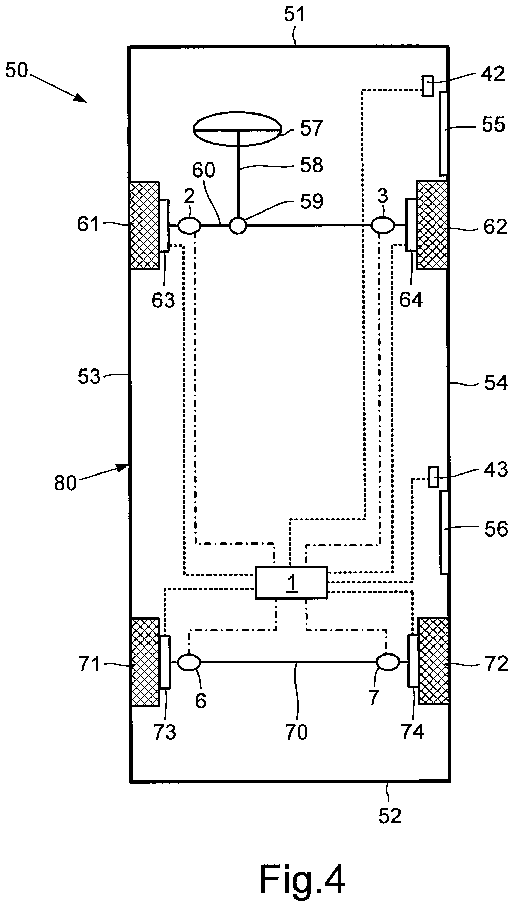

Zur besseren Orientierung wird zunächst ein in Fig. 4 dargestelltes Kraftfahrzeug, nämlich ein Omnibus 50 beschrieben, an dem eine Steuerungsvorrichtung 1 angeordnet ist, mit deren Hilfe das Verfahren gemäß der Erfindung durchführbar ist. Der Omnibus 50 weist einen Fahrzeugaufbau 80 mit einer in Vorwärtsfahrtrichtung weisenden Vorderseite 51, eine in Rückwärtsfahrtrichtung weisende Hinterseite 52, eine fahrbahninnere Fahrzeugseite 53 und eine fahrbahnäußere Fahrzeugseite 54 auf. Im Bereich der Vorderseite 51 des Omnibusses 50 ist ein Lenkrad 57 angeordnet, mittels dem über eine Lenkwelle 58 und ein Lenkgetriebe 59 die Räder 61, 62 der Vorderachse 60 von einem Fahrer lenkbar sind.

Der Fahrzeugaufbau 80 wird von einer Vorderachse 60 und einer Hinterachse 70 des Omnibusses 50 getragen. An den freien Enden der Vorderachse 60 ist ein linkes Vorderrad 61 und ein rechtes Vorderrad 62 drehbar angeordnet, während an der Hinterachse 70 ein linkes Hinterrad 71 und ein rechtes Hinterrad 72 drehbar befestigt ist. An den genannten Fahrzeugrädern 61, 62, 71, 72 sind vordere rechte und linke sowie hintere rechte und linke Radbremsen 63, 64, 73, 74 angeordnet, die als Betriebsbremsen und als Feststellbremsen betätigbar sind. Hierzu weisen die Radbremsen 63, 64, 73, 74 nicht dargestellte, jedoch bekannte Aktuatoren auf, die über gestrichelt gezeichnete Steuerleitungen hydraulisch, pneumatisch oder elektrisch von der Steuerungsvorrichtung 1 ansteuerbar sind.

Der Fahrzeugaufbau 80 wird über Luftfederbälge von den beiden Fahrzeugachsen 60, 70 getragen. Hierzu ist im Bereich des linken Vorderrads 61 ein linker vorderer Luftfederbalg 2, im Bereich des rechten Vorderrads 62 ein rechter vorderer Luftfederbalg 3, im Bereich des linken Hinterrads 71 ein linker hinterer Luftfederbalg 6 und im Bereich des rechten Hinterrads 72 ein rechter hinterer Luftfederbalg 7 angeordnet. Diese Luftfederbälge 2, 3, 6, 7 sind über strichpunktiert gezeichnete pneumatische Steuerleitungen mit der Steuerungsvorrichtung 1 verbunden, so dass sie von dieser bedarfsgerecht belüftet beziehungsweise entlüftet werden können.

Schließlich zeigt die Übersichtsdarstellung des Omnibusses 50 eine vordere Einstiegstür 55 und eine hintere Einstiegstür 56, deren Betätigungsstellung, also offen oder geschlossen, mittels eines der vorderen Einstiegstür 55 zugeordneten ersten Kontaktschalters 42 und mittels eines der hinteren Einstiegstür 56 zugeordneten zweiten Kontaktschalters 43 feststellbar ist. Die Signale der beiden Kontaktschalter 42, 43 werden der Steuerungsvorrichtung 1 über gestrichelt gezeichnete Signalleitungen zur Verfügung gestellt.

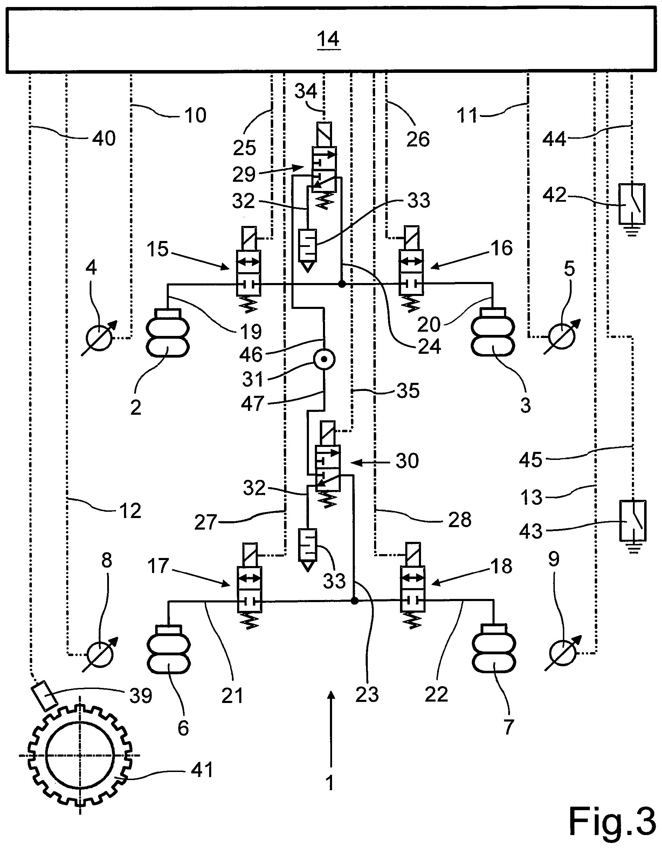

Fig. 3 zeigt in detaillierter Form den an sich bekannten Aufbau der bereits mehrfach erwähnten Steuerungseinrichtung 1 der Luftfederungsanlage des Omnibusses 50, bei der das erfindungsgemäße Verfahren zur Niveauregelung anwendbar ist. Demzufolge sind an der Vorderachse 60 nahe des linken Vorderrades 61 und nahe des rechten Vorderrades 62 zwischen jeweils einem Fahrwerkselement und dem Fahrzeugaufbau 80 ein linker vorderer Luftfederbalg 2 und ein rechter vorderer Luftfederbalg 3 sowie jeweils ein Wegsensor 4, 5 angeordnet. Ebenso sind an der Hinterachse 70 nahe des linken Hinterrades 71 und nahe des rechten Hinterrades 72 zwischen jeweils einem Fahrwerkselement und dem Fahrzeugaufbau 80 jeweils ein linker hinterer Luftfederbalg 6 und ein rechter hinterer Luftfederbalg 7 sowie jeweils ein Wegsensor 8, 9 angeordnet. Mittels des Luftdrucks und der Druckluftmenge in dem jeweiligen Luftfederbalg 2, 3, 6, 7 ist der vertikale Abstand zwischen dem betreffenden Fahrwerkselement sowie dem Fahrzeugaufbau 80 und somit die Bodenfreiheit des Omnibusses 50 an dem betreffenden Fahrzeugrad einstellbar. Die vertikalen Abstände zwischen dem betreffenden Fahrwerkselement sowie dem Fahrzeugaufbau 80 sind durch die jeweiligen Wegsensoren 4, 5, 8, 9 erfassbar und über zugeordnete Signalleitungen 10, 11, 12, 13 an ein elektronisches Steuergerät 14 übertragbar.

Zum Be- und Entlüften ist jedem der Luftfederbälge 2, 3, 6, 7 ein Niveauregelventil 15, 16, 17, 18 zugeordnet, über das jeweils eine Anschlussleitung 19, 20, 21, 22 des betreffenden Luftfederbalgs 2, 3, 6, 7 mit einer zugeordneten ersten Hauptleitung 23 beziehungsweise zweiten Hauptleitung 24 verbindbar ist, welche zu einem ersten Hauptschaltventil 29 beziehungsweise einem zweiten Hauptschaltventil 30 führen. Die vier Niveauregelventile 15, 16, 17, 18 sind als 2/2-Wege-Magnetschaltventile ausgebildet, die jeweils in einer ersten Schaltstellung (Ruhestellung) geschlossen und in einer zweiten Schaltstellung (Betätigungsstellung) geöffnet sind. Zur Betätigung der Niveauregelventile 15, 16, 17, 18 stehen deren Elektromagneten jeweils über eine Steuerleitung 25, 26, 27, 28 mit dem Steuergerät 14 in Verbindung. Um ein einseitiges Absenken des Fahrzeugaufbaus 80 (Kneeling-Funktion) durchzuführen, werden entweder die beiden auf der fahrbahninneren Fahrzeugseite 53 angeordneten Luftfederbälge 2, 6 über die zugeordneten Niveauregelventile 15, 17 und die beiden Hauptleitungen 23, 24 mit den beiden Hauptschaltventilen 29, 30 verbunden, oder die auf der fahrbahnäußeren Fahrzeugseite 54 angeordneten Luftfederbälge 3, 7 werden über die diesen zugeordneten Niveauregelventile 16, 18 und die beiden Hauptleitungen 23, 24 mit den beiden Hauptschaltventilen 29, 30 verbunden. Das einseitige Absenken des Fahrzeugaufbaus 80 wird dann erreicht, wenn sich die beiden Hauptschaltventile 29, 30 in der in Fig. 3 gezeigten Ruhestellung befinden, so dass die Druckluft aus den Luftfederbälgen 2, 6 bzw. den Luftfederbälgen 3, 7 über einen Schalldämpfer 33 in die Umgebungsluft entweichen kann.

Außerdem sind die beiden Hauptleitungen 23, 24 über die beiden Hauptschaltventile 29, 30 wechselweise mit einer Druckluftquelle 31 oder einer Druckluftsenke verbindbar. Bei der vorliegend nur symbolisch dargestellten Druckluftquelle 31 handelt es sich bevorzugt um eine mit einem Kompressor und/oder einem Druckluftspeicher, die (31) über jeweils eine erste Druckleitung 46 beziehungsweise eine zweite Druckleitung 47 mit den beiden Hauptschaltventilen 29, 30 verbunden ist. Die Druckluftsenke ist vorliegend aus einer über den Schalldämpfer 33 in die Umgebung führenden Drucklosleitung 32 gebildet.

Die beiden Hauptschaltventile 29, 30 sind jeweils als ein 3/2-Wege-Magnet-schaltventil ausgebildet, über das wie schon erwähnt die jeweilige Hauptleitung 23, 24 in einer ersten Schaltstellung (Ruhestellung) mit der Drucklosleitung 32 und in einer zweiten Schaltstellung (Betätigungsstellung) mit der Druckluftquelle 31 in Verbindung steht. Zur Betätigung der beiden Hauptschaltventile 29, 30 stehen deren Elektromagneten über jeweils eine Steuerleitung 34, 35 mit dem Steuergerät 14 in Verbindung.

Auf ein zwischen den beiden genannten Anschlussleitungen 19, 20 der an der Vorderachse 60 angeordneten Luftfederbälge 2, 3 üblicherweise vorhandenes schaltbares Drosselventil kann bei Nutzung des Verfahrens gemäß der Erfindung Kosten- und Bauraum sparend verzichtet werden, da eine ausgleichende pneumatische Fluidströmung zwischen den beiden Luftfederbälgen 2, 3 der Vorderachse 60 nicht notwendig ist.

Zur Erfassung der aktuellen Fahrgeschwindigkeit ist ein über eine Signalleitung 40 mit dem Steuergerät 14 verbundener Drehzahlsensor 39 vorgesehen, der an einem Geberrad 41 angeordnet ist. Das Geberrad 41 ist an einem Bauteil des Omnibusses 50, wie der Nabe eines Fahrzeugrades 61, 62, 71, 72 oder der Ausgangswelle des Fahrgetriebes, angeordnet, das im Fahrbetrieb proportional zur Fahrgeschwindigkeit rotiert. Alternativ dazu kann die anderweitig ermittelte Fahrgeschwindigkeit, der Öffnungsstatus mindestens einer Fahrzeugtür 55, 56 und/oder der Betätigungsstatus einer Bremse, insbesondere der Feststellbremse des Fahrzeugs 50, auch über ein CAN-Bus-Signal zur Verfügung gestellt werden.

Zur Registrierung des Schließzustands der vorderen und hinteren Einstiegstür 55, 56 ist jeweils der mit der betreffenden Einstiegstür 55, 56 in Wirkverbindung stehender vorderer beziehungsweise hinterer Kontaktschalter 42, 43 vorgesehen, der jeweils bei geöffneter vorderer beziehungsweise hinterer Einstiegstür 55, 56 geschlossen ist und über eine zugeordnete erste beziehungsweise zweite Signalleitung 44, 45 mit dem Steuergerät 14 in Verbindung steht.

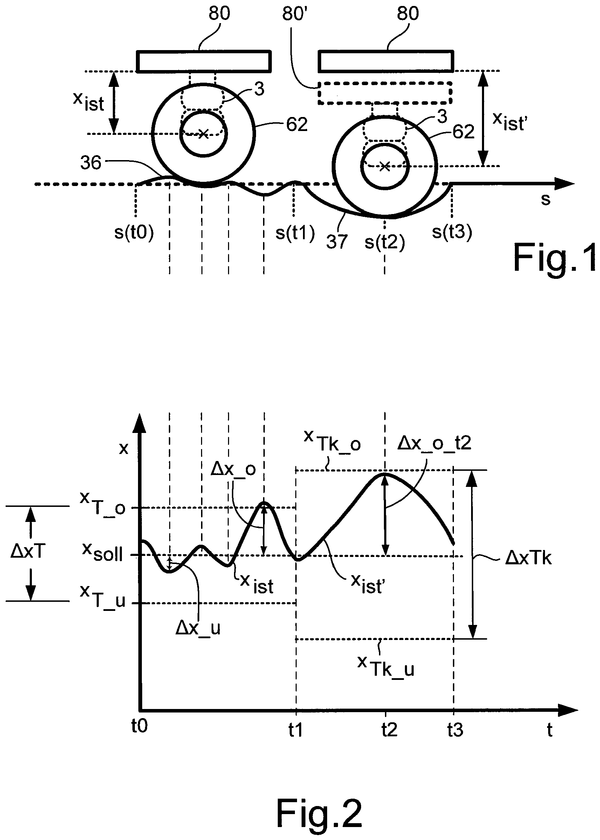

Nachfolgend wird das Verfahren gemäß der Erfindung anhand der Figuren 1 und 2 in einer Ausführungsform beispielhaft für die Radaufhängung des rechten Vorderrades 62 beziehungsweise den diesem zugeordneten Luftfederbalg 3 erläutert.

Fig. 1 zeigt schematisch das rechte Vorderrad 62 beim Befahren eines Fahrweges. Dieser Fahrweg erstreckt sich über eine Strecke s und weist erkennbar Fahrwegerhöhungen 36 und Fahrwegvertiefungen 37 auf, die von einer gestrichelt dargestellten Horizontalen nach oben und unten abweichen. Das Vorderrad 62 rollt auf diesem Fahrweg von links nach rechts ab und befindet sich daher zu unterschiedlichen Zeitpunkten t an zugeordneten Streckenpunkten s(t). Über dem Vorderrad 62 ist ein Bauteil des Fahrzeugaufbaus 80 dargestellt, welches mit dem Vorderrad 62 über den zugeordneten Luftfederbalg 3 verbunden ist. Der Abstand der Radachse von dem Bauteil des Fahrzeugaufbaus 80 beziehungsweise das Ist-Niveau ist mit xᵢₛₜ bezeichnet.

Im Bereich der Fahrstrecke s(t0) bis s(t1) befindet sich der Omnibusses 50 in einer Betriebssituation, bei der dessen Vorderrad 62 auf einem vergleichsweise ebenen Abschnitt des Fahrweges abrollt. In diesem Fahrstreckenabschnitt s(t0) bis s(t1) liegt der Wert des Ist-Niveaus xᵢₛₜ ausweislich Fig. 2 fast immer innerhalb des Toleranzbandes ΔxT, welches durch eine obere Toleranzgrenze x_{T_o} und eine untere Toleranzgrenze x_{T_u} begrenzt ist, so dass das Steuergerät 14 nicht niveauregelnd eingreifen muss. Beispielhaft ist eine geringe negative Abweichung Δx_u des Ist-Niveaus xᵢₛₜ vom Soll-Niveau xₛₒₗₗ gesondert markiert. Jedoch ist kurz vor dem Zeitpunkt t1 eine positive Abweichung Δx_o des Ist-Niveaus xᵢₛₜ vom Soll-Niveau xₛₒₗₗ erkennbar, die größer ist als die obere Toleranzgrenze x_{T_o}, worauf das Ist-Niveau xᵢₛₜ durch eine konventionelle Regelungstätigkeit des Niveauregelungssystems noch vor Erreichen des Zeitpunktes t1 auf einen Wert innerhalb des Toleranzbandes ΔxT zurückgeführt wird.

Bei einer konventionellen Regelungstätigkeit wird der rechte vordere Luftfederbalg 3 belüftet, sobald das Ist-Niveau xᵢₛₜ die untere Toleranzgrenze x_{T_u} unterschritten hat, und entlüftet, sobald das Ist-Niveau xᵢₛₜ die obere Toleranzgrenze x_{T_o} überschritten hat. Zur Belüftung des rechten vorderen Luftfederbalges 3 wird zunächst durch die Betätigung des zugeordneten zweiten Hauptschaltventils 30 die zweite Hauptleitung 24 mit der Druckluftquelle 31 verbunden und anschließend durch die Betätigung des dem rechten vorderen Luftfederbalg 3 zugeordneten Niveauregelventils 16 die Anschlussleitung 20 des rechten vorderen Luftfederbalgs 3 so lange mit der zweiten Hauptleitung 24 verbunden, bis das Ist-Niveau xᵢₛₜ das Soll-Niveau xₛₒₗₗ weitgehend erreicht hat. Zur Entlüftung des rechten vorderen Luftfederbalgs 3 wird durch die Betätigung des dem rechten vorderen Luftfederbalg 3 zugeordneten Niveauregelventils 16 die Anschlussleitung 20 des rechten vorderen Luftfederbalgs 3 so lange mit der im Ruhezustand drucklos geschalteten zweiten Hauptleitung 24 verbunden, bis das Ist-Niveau xᵢₛₜ das Soll-Niveau xₛₒₗₗ weitgehend erreicht hat. Die beiden Toleranzgrenzen x_{T_u}, x_{T_o} sind so gewählt, dass sich im normalen Fahrbetrieb ein optimaler Kompromiss zwischen Fahrsicherheit, Fahrkomfort und Druckluftverbrauch ergibt.

Im weiteren Verlauf bewegt sich der Omnibus 50 weiter und das Vorderrad 62 fährt dabei im Bereich der Fahrtstrecke s(t1) bis s(t2) in eine größere Fahrwegvertiefung 37 hinein und hält dort an. Hätte der Omnibus 50 nur drei Räder, nämlich zwei Räder an der Vorderachse 60 und ein Rad an der Hinterachse 70, dann würde das rechte Vorderrad 62 in die Fahrwegvertiefung 37 hineinfahren und den Fahrzeugaufbau 80' in die gestrichelt dargestellte Lage kippen. Da der Omnibus 50 jedoch vier wenigstens Räder 61, 62, 71, 72 hat, bleibt dessen Fahrzeugaufbau 80 in einer weitgehend stabilen horizontalen Lage.

An der tiefsten Fahrwegstelle s(t2) weist das Ist-Niveau xᵢₛₜ' beziehungsweise der Abstand zwischen der Radachse und dem Fahrzeugaufbau 80 den Niveauwert xᵢₛₜ' auf, welcher größer ist als der vorherige Abstand bzw. das vorherige Ist-Niveau xᵢₛₜ. Der Wegsensor 5 am rechten Vorderrad 62 stellt diesen erhöhten Abstandswert xᵢₛₜ' fest und teilt dies dem Steuergerät 14 mit. Ein konventionell arbeitendes Niveauregelsystem leitet aus dem erhöhten Abstandswert xᵢₛₜ' am rechten Vorderrad 62 einen Schiefstand des Fahrzeugaufbaus 80 ab, so dass es eine Regeltätigkeit zur Beseitigung dieser Schiefstellung dann beginnt, wenn die Abweichung des gemessenen Abstandswertes xᵢₛₜ' von einem vorgegebenen Abstandssollwert beziehungsweise Soll-Niveau xₛₒₗₗ unangemessen abweicht. Zulässige Abweichungen des gemessenen Ist-Niveau xᵢₛₜ' von dem vorgegebenen Soll-Niveau xₛₒₗₗ, die keine Regeltätigkeit des Steuergeräts 14 auslösen, liegen innerhalb eines Toleranzbandes ΔxT, welches durch eine untere Toleranzgrenze x_{T_u} sowie eine obere Toleranzgrenze x_{T_ο} begrenzt ist.

Zum Zeitpunkt t1 fährt das rechte Vorderrad 62 demnach langsam in die Fahrwegvertiefung 37 ein, in welcher der Omnibus 50 zum Zeitpunkt t2 zum Stillstand kommt. Sobald das Steuergerät 14 den Fahrzeugstillstand registriert hat, wird auf der Grundlage der von den jeweiligen Wegsensoren 4, 5, 8, 9 gemessenen Abstands- oder Niveauwerten ermittelt, an welchem Fahrzeugrad 61, 62, 71, 72 die Differenz Δx_0_t2 des Ist-Niveaus xᵢₛₜ' zum Soll-Niveau Xₛₒₗₗ am größten ist. Überschreitet diese größte Differenz Δx_o_t2 zwischen dem Ist-Niveauwert xᵢₛₜ, und dem Soll-Niveauwert xₛₒₗₗ eine Toleranzgrenze x_{T_u}, x_{T_o} des Toleranzbandes ΔxT, dann schließt das Steuergerät 14 auf einen Fahrzeugschiefstand an dieser Fahrzeugradposition. Als Reaktion darauf wird durch das Steuergerät 14 für diese Fahrzeugradposition ein korrigiertes Toleranzband ΔxTk mit korrigierten Toleranzgrenzen x_{Tk_u}, x_{Tk_o} festgelegt, in dessen Folge die vergleichsweise große Abweichung Δx_o_t2 des Ist-Niveauwertes xᵢₛₜ' vom Soll-Niveauwert xₛₒₗₗ durch das Niveauregelungssystem nicht hin zu einem geringeren Differenzwert ausgeregelt wird.

Mit engem Bezug zu den Figuren 1 und 2 bedeutet dies, dass bei Fahrzeugstillstand zum Zeitpunkt t(2) das Ist-Niveau xᵢₛₜ' des Luftfederbalges 3 am rechten Vorderrad 62 einen Wert Δx_o_t2 aufweist, der deutlich größer ist als die obere Toleranzgrenze x_{T_o} unkorrigierten des Toleranzbandes ΔxT. Während bei konventionellen Niveauregelsystemen das Steuergerät 14 nun eine Regeltätigkeit starten würde, um diese Fehlstellung wegzuregeln, wird durch das Verfahren gemäß der Erfindung eine solche Regeltätigkeit unterdrückt. Die Unterdrückung einer solchen Regeltätigkeit wird ausgelöst, indem bei Erkennen der geschilderten Betriebssituation, also bei Fahrzeugstillstand und dem Überschreiten des Ist-Niveaus x_{ist'} an einer Radposition über eine Toleranzgrenzen x_{T_u}, x_{T_o} des Toleranzbandes ΔxT, diese ursprünglichen Toleranzgrenzen x_{T_u}, x_{T_ο} um vorbestimmte Beträge auf korrigierte Toleranzgrenzen X_{Tk_u}, x_{Tk_o} im Sinne einer Vergrößerung des ursprünglichen Toleranzbandes ΔxT hin zu einem korrigierten Toleranzband ΔxTk geändert werden.

Wie Fig. 2 zeigt, ist dadurch an dem Luftfederbalg 3 des rechten Vorderrades 62 ein korrigiertes Toleranzband ΔxTk wirksam, innerhalb dessen korrigierte Toleranzgrenzen x_{Tk_u}, x_{Tk_o} auch das zum Zeitpunkt t2 aktuelle Ist-Niveau xᵢₛₜ' fällt. Eine Regelungstätigkeit des Steuergeräts 14 wird daher nicht ausgelöst. Da es sich bei dem hier betrachteten Fahrzeug um einen Omnibus 50 mit mindestens vier Rädern 61, 62, 71, 72 handelt, steht der Omnibus 50 dennoch stabil in einer weitgehend horizontalen Ausrichtung, wobei lediglich das rechte Vorderrad 62 hinsichtlich der zum Fahrweg abzuleitenden Radaufstandskräfte etwas erleichtert und die anderen Fahrzeugräder 61, 71, 72 etwas mehr belastet sind. Die Regelungstätigkeit des Steuergeräts 14 und der von ansteuerbaren Steuerventile ist dadurch vorteilhaft verringert.

Mit Blick auf Fig. 2 kann weiter vorgesehen sein, dass bei dem Luftfederbalg 3, bei dem die Toleranzgrenzen x_{T_u}, x_{T_ο} auf korrigierte Toleranzgrenzen x_{Tk_u}, x_{Tk_o} geändert wurden, bei einem Überschreiten dieser korrigierten Toleranzgrenzen x_{Tk_u}, x_{Tk_o} das Ist-Niveau xᵢₛₜ durch eine Regelungstätigkeit des Steuergeräts 14 auf einen Wert zurückgeregelt wird, der innerhalb der Toleranzgrenzen x_{T_u}, x_{T_o} des unkorrigierten Toleranzbandes ΔxT dieses Luftfederbalgs 3 liegt. Dabei wird grundsätzlich nicht exakt auf den Wert des Soll-Niveaus xₛₒₗₗ geregelt, sondern auf einen Wert, der etwas größer oder etwas kleiner ist als dieser Soll-Niveauwert xₛₒₗₗ.

Es kann auch vorgesehen sein, dass bei geöffneter Fahrzeugtür 55 nicht der dieser Fahrzeugtür 55 nahe Luftfederbalg 3 korrigierte Toleranzgrenzen x_{Tk_u}, x_{Tk_o} zugewiesen bekommt, obwohl an diesem ein Ist-Niveauwert x_{ist'} ermittelt wurde, der außerhalb der Toleranzgrenzen des x_{T_u}, x_{T_o} des unkorrigierten Toleranzbandes ΔxT liegt, sondern derjenige Luftfederbalg 2, welcher an der gleichen Fahrzeugachse 60 auf der gegenüberliegenden Fahrzeugseite 53 angeordnet ist. Hierdurch wird dann, wenn die fahrbahninnere Seite 54 des Omnibusses 50 zum leichteren Ein- und Aussteigen an einer Haltestelle abgesenkt werden soll, die dazu notwendige Niveauregelung durch Entlüften der fahrbahninneren Luftfederbälge 3, 7 sehr exakt möglich. Zugleich wird jedoch eine Niveauregelung an dem an der gleichen Fahrzeugachse 60 gegenüberliegenden Luftfederbalg 2 unterdrückt und dadurch die Regeltätigkeit vorteilhaft verringert.

Gemäß einer anderen Ausführungsform kann vorgesehen sein, dass die betreffenden Toleranzgrenzen x_{T_u}, x_{T_o} für die an der Vorderachse 60 angeordneten Luftfederbälge 2, 3 nur dann entsprechend auf korrigierte Toleranzgrenzen x_{Tk_u}, x_{Tk_o} verändert werden, wenn die vordere Einstiegstür 55 auch tatsächlich geöffnet ist. Bei dieser Betriebsweise wird die Regelungstätigkeit des Niveauregelungssystems nur dann reduziert, wenn tatsächlich auch das Ein- oder Aussteigen von Personen aus dem Omnibus erwartet werden kann.

Sobald der Omnibus 50 in diesem Ausführungsbeispiel wieder anfährt und im Zeitpunkt t3 an der Fahrwegstelle s(t3) die Fahrwegvertiefung 37 verlässt, wird dies durch das Steuergerät 14 anhand der übermittelten Messwerte des Drehzahlsensors 39 und der Wegsensoren 4, 5, 8, 9 festgestellt. Sobald dies geschehen ist, weist das Steuergerät 14 allen Luftfederbälgen 2, 3, 6, 7 die unkorrigierten Grenzen des x_{T_u}, x_{T_o} des unkorrigierten Toleranzbandes ΔxT zu, so dass nun eine konventionelle Niveauregelung im Fahrbetrieb erfolgt.

Durch die vorgeschlagene Betriebsweise des Steuergeräts 14 wird die Regelungstätigkeit des Niveauregelungssystems bei stillstehendem Fahrzeug stark reduziert, welches wegen reduzierter Betätigungshäufigkeit die maximale Gebrauchsdauer der betroffenen Steuerventile verlängert. Außerdem ist es bei dem Stillstand eines Omibusses an einer Haltestelle für den zusteigenden oder aussteigenden Fahrgast von Vorteil, wenn in diesem Zeitraum keine Regelungstätigkeit der Niveauregelanalge hörbar und/oder spürbar ist. Außerdem kann auf den Einbau einer schaltbaren Drossel zwischen den beiden achsseitig gegenüberliegenden Luftfederbälgen 2, 3 der Vorderachse 60 verzichtet werden, weil ein in der geschilderten Betriebssituation, bei der sich ein Vorderrad 62 in einer größeren Fahrwegvertiefung 37 oder auf einer größeren Fahrwegerhöhung 36 befindet, ein Überströmen von Druckluft von dem Luftfederbalg 3 des einen Vorderrades 62 zu dem Luftfederbalg 2 des anderen Vorderrades 61 nicht mehr notwendig ist.

### Bezugszeichenliste (Bestandteil der Beschreibung)

- 1: Steuerungseinrichtung
- 2: Luftfederbalg
- 3: Luftfederbalg
- 4: Wegsensor am Luftfederbalg 2
- 5: Wegsensor am Luftfederbalg 3
- 6: Luftfederbalg
- 7: Luftfederbalg
- 8: Wegsensor am Luftfederbalg 6
- 9: Wegsensor am Luftfederbalg 7
- 10: Signalleitung von Wegsensor 4
- 11: Signalleitung von Wegsensor 5
- 12: Signalleitung von Wegsensor 8
- 13: Signalleitung von Wegsensor 9
- 14: Steuergerät
- 15: Niveauregelventil von Luftfederbalg 2
- 16: Niveauregelventil von Luftfederbalg 3
- 17: Niveauregelventil von Luftfederbalg 6
- 18: Niveauregelventil von Luftfederbalg 7
- 19: Anschlussleitung von Luftfederbalg 2
- 20: Anschlussleitung von Luftfederbalg 3
- 21: Anschlussleitung von Luftfederbalg 6
- 22: Anschlussleitung von Luftfederbalg 7
- 23: Erste Hauptleitung
- 24: Zweite Hauptleitung
- 25: Steuerleitung von Niveauregelventil 15
- 26: Steuerleitung von Niveauregelventil 16
- 27: Steuerleitung von Niveauregelventil 17
- 28: Steuerleitung von Niveauregelventil 18
- 29: Erstes Hauptschaltventil
- 30: Zweites Hauptschaltventil
- 31: Druckluftquelle, Druckleitung
- 32: Drucklosleitung
- 33: Schalldämpfer
- 34: Steuerleitung des ersten Hauptschaltventils 29
- 35: Steuerleitung des zweiten Hauptschaltventils 30
- 36: Fahrwegerhöhung
- 37: Fahrwegvertiefung
- 39: Drehzahlsensor
- 40: Signalleitung von Drehzahlsensor 39
- 41: Geberrad
- 42: Kontaktschalter
- 43: Kontaktschalter
- 44: Erste Signalleitung (vom Kontaktschalter 42)
- 45: Zweite Signalleitung (vom Kontaktschalter 43)
- 46: Erste Druckleitung
- 47: Zweite Druckleitung
- 50: Omnibus, Kraftfahrzeug
- 51: Vorderseite des Omnibusses
- 52: Hinterseite des Omnibusses
- 53: Fahrbahninnere Seite des Omnibusses
- 54: Fahrbahnäußere Seite des Omnibusses
- 55: Vordere Einstiegstür
- 56: Hintere Einstiegstür
- 57: Lenkrad
- 58: Lenksäule
- 59: Lenkgetriebe
- 60: Vorderachse
- 61: Linkes Vorderrad
- 62: Rechtes Vorderrad
- 63: Radbremse, Feststellbremse vorne links
- 64: Radbremse, Feststellbremse vorne rechts
- 70: Hinterachse
- 71: Linkes Hinterrad
- 72: Rechtes Hinterrad
- 73: Radbremse, Feststellbremse hinten links
- 74: Radbremse, Feststellbremse hinten rechts
- 80, 80': Fahrzeugaufbau
- x: Fahrwerksniveau
- xᵢₛₜ, x_{ist'}: Ist-Niveau
- xₛₒₗₗ: Soll-Niveau
- x_{T_o}: Obere Toleranzgrenze
- x_{T_u}: Untere Toleranzgrenze
- x_{Tk_o}: Korrigierte obere Toleranzgrenze
- x_{Tk_u}: Korrigierte untere Toleranzgrenze
- ΔxT: Toleranzband, unkorrigiert
- ΔxTk: Toleranzband, korrigiert
- Δx_o_t2: Abweichung des Ist-Niveaus zum Soll-Niveau im Zeitpunkt t2
- s: Fahrwegstrecke
- s(t0), s(t1): Fahrwegpunkt
- s(t2), s(t3): Fahrwegpunkt
- t: Zeit
- t0, t1: Zeitpunkte
- t2, t3: Zeitpunkte
- Δx_u: Negative Abweichung vom Soll-Niveau
- Δx_o: Positive Abweichung vom Soll-Niveau

## Patentansprüche

1. Verfahren zur Niveauregelung eines luftgefederten Kraftfahrzeugs, beispielsweise eines Omnibusses (50), das eine luftgefederte Vorderachse (60) und mindestens eine luftgefederte Hinterachse (70) aufweist, und bei dem mehrere zwischen Fahrwerkselementen der Fahrzeugachsen (60, 70) und dem Fahrzeugaufbau (80, 80') angeordnete Luftfederbälge (2, 3, 6, 7) zur Regelung ihres Ist-Niveaus (xᵢₛₜ) auf ein vorgegebenes Soll-Niveau (xₛₒₗₗ) über als Schaltventile ausgebildete Niveauregelventile (15, 16, 17, 18) jeweils beim Unterschreiten einer unteren Toleranzgrenze (x_{T_u}) eines Toleranzbandes (ΔxT) belüftet und beim Überschreiten einer oberen Toleranzgrenze (x_{T_o}) des Toleranzbandes (ΔxT) entlüftet werden, wobei beim Vorliegen eines bestimmten Betriebszustandes zumindest eine der beiden Toleranzgrenzen (x_{T_u}, x_{T_o}) für zumindest einen Luftfederbalg (2, 3, 6, 7) mindestens einer Fahrzeugachse (60, 70) oder einer Fahrzeugseite (53, 54) in geeigneter Weise verändert wird, wobei die Fahrgeschwindigkeit und/oder der Betätigungszustand einer Feststellbremse (63, 64, 73, 74) sensorisch erfasst werden, wobei dann, wenn die Fahrgeschwindigkeit eine als Fahrzeugstillstand interpretierbare Mindestfahrgeschwindigkeit unterschritten hat und/oder die Feststellbremse (63, 64, 73, 74) betätigt ist, im Bereich eines jeden Luftfederbalgs (2, 3; 6, 7) das Ist-Niveau (xᵢₛₜ) gemessen wird, wobei die Messwerte der Ist-Niveaus (xᵢₛₜ) mit dem vorgegebenen Wert für das Soll-Niveau (xₛₒₗₗ) verglichen werden, wobei derjenige Ist-Niveauwert (xᵢₛₜ) eines Luftfederbalgs (2, 3, 6, 7) ermittelt wird, der die größte Abweichung zum Soll-Niveau (xₛₒₗₗ) aufweist, und wobei für denjenigen Luftfederbalg (2, 3; 6, 7), an dem die größte Abweichung (Δx_o_t2) des Ist-Niveaus (xᵢₛₜ) vom Soll-Niveau (_{Xsoll}) festgestellt wurde, im Sinne einer Vergrößerung des Toleranzbandes (ΔxT) dessen obere Toleranzgrenze (_{XT_o}) auf eine korrigierte obere Toleranzgrenze (x_{Tk_o}) erhöht wird und/oder dessen untere Toleranzgrenze (x_{T_u}) auf eine korrigierte untere Toleranzgrenze (x_{Tk_u}) abgesenkt wird, **dadurch gekennzeichnet, dass** bei demjenigen Luftfederbalg (3), bei dem eine obere Toleranzgrenze (x_{T_o}) und/oder eine untere Toleranzgrenze (x_{T_u}) auf eine obere und/oder untere korrigierte Toleranzgrenzen (x_{Tk_u}, x_{Tk_o}) geändert wurde, bei einem Überschreiten dieser oberen oder unteren korrigierten Toleranzgrenze (x_{Tk_u}, x_{Tk_o}) das Ist-Niveau (xᵢₛₜ') auf einen Wert zurück geregelt wird, der innerhalb des korrigierten Toleranzbandes (ΔxTk) und außerhalb des unkorrigierten Toleranzbandes (ΔxT) für diesen Luftfederbalg (3) liegt.

2. Verfahren nach Anspruch 1, **dadurch gekennzeichnet, dass** dieses Verfahren beim Betrieb eines Omnibusses (50) mit wenigstens einer Fahrzeugtür genutzt wird.

3. Verfahren nach Anspruch 2, **dadurch gekennzeichnet, dass** bei geöffneter Fahrzeugtür (55) nicht der dieser Fahrzeugtür (55) nahe Luftfederbalg (3) korrigierte Toleranzgrenzen (x_{Tk_u}, x_{Tk_o}) zugewiesen bekommt, obwohl an diesem ein Ist-Niveauwert (x_{ist'}) ermittelt wurde, der außerhalb der Grenzen (x_{T_u}, x_{T_o}) des unkorrigierten Toleranzbandes (ΔxT) liegt, sondern derjenige Luftfederbalg (2), welcher an der gleichen Fahrzeugachse (60) an der gegenüberliegenden Fahrzeugseite (53) angeordnet ist.

4. Verfahren nach Anspruch 2, **dadurch gekennzeichnet, dass** bei geöffneter Fahrzeugtür (55) nicht der dieser Fahrzeugtür (55) nahe Luftfederbalg (3) korrigierte Toleranzgrenzen (x_{Tk_u}, x_{Tk_o}) zugewiesen bekommt, obwohl an diesem ein Ist-Niveauwert (xᵢₛₜ) ermittelt wurde, der außerhalb der Grenzen (x_{T_u}, x_{T_o}) des unkorrigierten Toleranzbandes (ΔxT) liegt, sondern derjenige Luftfederbalg (2), welcher an der anderen Fahrzeugachse (60) an der gegenüberliegenden Fahrzeugseite (53), also diagonal gegenüber, angeordnet ist.

5. Verfahren nach Anspruch 2, **dadurch gekennzeichnet, dass** bei geöffneter Fahrzeugtür (55) nicht der dieser Fahrzeugtür (55) nahe Luftfederbalg (3) korrigierte Toleranzgrenzen (x_{Tk_u}, x_{Tk_o}) zugewiesen bekommt, obwohl an diesem ein Ist-Niveauwert (x_{ist'}) ermittelt wurde, der außerhalb der Grenzen (x_{T_u}, x_{T_o}) des unkorrigierten Toleranzbandes (ΔxT) liegt, sondern alle diejenigen Luftfederbälge (2, 6), welche an der gegenüberliegenden Fahrzeugseite (53) angeordnet sind.

6. Verfahren nach einem der Ansprüche 2 bis 5, **dadurch gekennzeichnet, dass** die betreffenden oberen und/oder unteren korrigierten Toleranzgrenzen (x_{Tk_u}, x_{Tk_o}) für den zu der Fahrzeugtür (55) nahe angeordneten Luftfederbalg (3) auf die oberen und/oder unteren unkorrigierten Toleranzgrenzen (x_{Tk}, x_{Tk}) zurückversetzt werden.

7. Verfahren nach Anspruch 6, **dadurch gekennzeichnet, dass** das Zurücksetzen auf die oberen und/oder unteren unkorrigierten Toleranzgrenzen (x_{Tk}, x_{Tk}) für den zu der Fahrzeugtür (55) nahe angeordneten Luftfederbalg (3) erfolgt, bevor eine Regelung des Niveaus stattfindet.

8. Verfahren nach einem der Ansprüche 3 bis 7, **dadurch gekennzeichnet, dass** die betreffenden Toleranzgrenzen (x_{T_u}, x_{T_ο}) für die an der Vorderachse (60) angeordneten Luftfederbälge (2, 3) nur dann entsprechend verändert werden, wenn die vordere Einstiegstür (55) des Kraftfahrzeugs (50) auch tatsächlich geöffnet ist.

9. Verfahren nach einem der Ansprüche 1 bis 8, **dadurch gekennzeichnet, dass** einem Luftfederbalg, dessen Ist-Niveau (xᵢₛₜ) die obere oder
untere unkorrigierte Toleranzgrenze (x_{Tko}, x_{Tku}) überschreitet, die gleichen oberen und/oder unteren korrigierten Toleranzgrenzen (x_{Tko}, x_{Tku}) zugewiesen werden, wie jedem anderen der Luftfederbälge des Fahrzeugs, wenn bei einem dieser anderen Luftfederbälge die obere und/oder untere unkorrigierte Toleranzgrenzen (x_{Tko}, x_{Tku}) überschritten wird.

10. Verfahren nach einem der Ansprüche 1 bis 8, **dadurch gekennzeichnet, dass** einem Luftfederbalg, dessen Ist-Niveau (xᵢₛₜ) die obere oder untere unkorrigierte Toleranzgrenze (x_{Tko}, x_{Tku}) überschreitet, andere obere und/oder untere korrigierte Toleranzgrenzen (x_{Tko}, x_{Tku}) zugewiesen werden, als einem oder allen der anderen Luftfederbälgen des Fahrzeugs, wenn bei einem dieser anderen Luftfederbälge die obere und/oder untere unkorrigierte Toleranzgrenzen (x_{Tko}, x_{Tku}) überschritten wird.

11. Verfahren nach einem der Ansprüche 1 bis 10, **dadurch gekennzeichnet, dass** die obere und die untere Toleranzgrenze (x_{To}, x_{Tu}) an einem Luftfederbalg (2, 3, 6, 7), ab deren Überschreiten diesem Luftfederbalg (2, 3, 6, 7) korrigierte obere und/oder untere Toleranzgrenzen (x_{Tko}, x_{Tku}) zugewiesen werden, für alle Luftfederbälge
(2, 3, 6, 7) gleich ist.

12. Verfahren nach einem der Ansprüche 1 bis 11, **dadurch gekennzeichnet, dass** die obere und die untere unkorrigierte Toleranzgrenze an einem Luftfederbalg, ab deren Überschreiten diesem Luftfederbalg korrigierte obere und/oder untere Toleranzgrenzen zugewiesen werden, für alle oder einige Luftfederbälge unterschiedlich ist.

13. Verfahren nach einen der vorherigen Ansprüche, **dadurch gekennzeichnet, dass** der Wert der diejenigen positiven oder negativen Abweichung (Δx_o, Δx_u) des Ist-Niveaus (xᵢₛₜ) vom Soll-Niveau (xₛₒₗₗ), ab welchem dem zugehörigen Luftfederbalg (2, 3, 6, 7) eine korrigierte obere und/oder untere Toleranzgrenze (x_{Tko}, x_{Tku}) zugewiesen wird, innerhalb des Wertebereichs der unkorrigierten Toleranzgrenzen (x_{Tk}, x_{Tk}) liegt.

## Claims

1. A method for level control of a motor vehicle with air suspension, for example an omnibus (50), that comprises an air-suspended front axle (60) and at least one air-suspended rear axle (70), and in said method, by means of level-adjustment valves (15, 16, 17, 18) in the form of control valves, a plurality of air-spring bellows (2, 3, 6, 7) arranged between chassis suspension elements of the vehicle axles (60, 70) and the vehicle body (80, 80') are each supplied with air whenever a lower tolerance limit (x_{T_u}) of a tolerance band (ΔxT) is not reached, and air is released from said bellows whenever an upper tolerance limit (x_{T_o}) of the tolerance band (ΔxT) is exceeded, in order to control their actual level (xᵢₛₜ) to the predetermined target level (xₛₒₗₗ), wherein, in a particular operational state, at least one of said two tolerance limits (x_{T_u}, x_{T_o}) is modified in a suitable manner for at least one air-spring bellows (2, 3, 6, 7) of at least one vehicle axle (60, 70) or one vehicle side (53, 54), wherein, in order to reduce the period required for this control, the travel speed and/or the actuation state of a parking brake (63, 64, 73, 74) are determined by means of sensors, wherein if the travel speed falls short of a minimum travel speed which can be interpreted as a vehicle standstill, and/or if the parking brake (63, 64, 73, 74) has been actuated, the actual level (xᵢₛₜ) is measured in the region of each air spring bellows (2, 3; 6, 7), wherein the measurement values of the actual level (xᵢₛₜ) are compared to the predetermined value for the target level (xₛₒₗₗ), wherein the actual level value (xᵢₛₜ) of an air-spring bellows (2, 3, 6, 7) is determined which has the greatest deviation from said target level (xₛₒₗₗ), and wherein for the air-spring bellows (2, 3, 6, 7) at which the greatest deviation (Δx_o_t2) of the actual level (xᵢₛₜ) from the target level (xₛₒₗₗ) has been determined, within the sense of an enlargement of the tolerance band (ΔxT) the upper tolerance limit (x_{T_o}) thereof is increased to a corrected upper tolerance limit (X_{Tk_o}) and/or the lower tolerance limit (X_{T_u}) thereof is reduced to a corrected lower tolerance limit (X_{Tk_u}), **characterized in that** the air spring bellows (3) for which an upper tolerance limit (x_{T_o}) and/or a lower tolerance limit (X_{T_u}) has been modified to an upper and/or lower corrected tolerance limit (X_{Tk_o}, X_{Tk_u}), in which when this upper or lower corrected tolerance limit (x_{Tk_o}, X_{Tk_u}) is exceeded, the actual level (x_{ist'}) is regulated back to a value which lies within the corrected tolerance band (ΔxTk) and outside of the uncorrected tolerance band (ΔxT) for this air spring bellows (3).

2. The method according to claim 1, **characterized in that** this method is used in the operation of an omnibus (50) with at least one vehicle door.

3. The method according to claim 2, **characterized in that** when the vehicle door (55) is opened, the air spring bellows (3) near this vehicle door (55) does not received assigned corrected tolerance limits (X_{Tk_u}, x_{Tk_o}), although an actual level value (x_{ist'}) was determined on said air spring bellows that lies outside of the limits (x_{T_u}, x_{T_o}) of the uncorrected tolerance band (ΔxT), but rather the air spring bellows (2), which is arranged on the same vehicle axle (60) on the opposite vehicle side (53).

4. The method according to claim 2, **characterized in that** when the vehicle door (55) is opened, the air spring bellows (3) near this vehicle door (55) does not received assigned corrected tolerance limits (x_{Tk_u}, x_{Tk_o}), although an actual level value (x_{ist'}) was determined on said air spring bellows that lies outside of the limits (x_{T_u}, x_{T_o}) of the uncorrected tolerance band (ΔxT), but rather the air spring bellows (2), which is arranged on the other vehicle axle (60), thus diagonally opposite, on the opposite vehicle side (53).

5. The method according to claim 2, **characterized in that** when the vehicle door (55) is opened, the air spring bellows (3) near this vehicle door (55) does not receive assigned corrected tolerance limits (x_{Tk_u}, X_{Tk_o}), although an actual level value (x_{ist'}) was determined that lies outside of the limits (x_{T_u}, x_{T_o}) of the uncorrected tolerance band (ΔxT), but rather all air spring bellows (2, 6), which are arranged on the opposite vehicle side (53).

6. The method according to any of claims 2 to 5, **characterized in that** the relevant upper and/or lower corrected tolerance limits (x_{Tk_u}, x_{Tk_o}) for the air spring bellows (3) arranged near the vehicle door (55) are reset to the upper and/or lower uncorrected tolerance limits (x_{Tk}, x_{Tk}).

7. The method according to claim 6, **characterized in that** the resetting to the upper and/or lower uncorrected tolerance limits (x_{Tk}, x_{Tk}) for the air spring bellows (3) arranged near the vehicle door (55) occurs before a level control takes place.

8. The method according to any of claims 3 to 7, **characterized in that** the relevant tolerance limits (x_{T_u}, x_{T_o}) for the air spring bellows (2, 3) arranged on the front axle (60) are only correspondingly modified when the front entry door (55) of the motor vehicle (50) is actually open.

9. The method according to any of claims 1 to 8, **characterized in that** an air spring bellows the actual level (xᵢₛₜ) of which exceeds the upper or lower uncorrected tolerance limit (x_{Tko}, x_{Tku}) is assigned the same upper and lower corrected tolerance limits (x_{Tko}, x_{Tku}) , like any of the other air spring bellows of the vehicle when the upper and/or lower uncorrected tolerance limits (x_{Tko}, X_{Tku}) are exceeded for one of these other air spring bellows.

10. The method according to any of claims 1 to 8, **characterized in that** an air spring bellows the actual level (xᵢₛₜ) of which exceeds the upper or lower uncorrected tolerance limit (x_{Tko}, X_{Tku}) is assigned different upper and lower corrected tolerance limits (x_{Tko}, X_{Tku}) than any of the other air spring bellows of the vehicle when the upper and/or lower uncorrected tolerance limits (x_{Tko}, X_{Tku}) are exceeded for one of these other air spring bellows.

11. The method according to any of claims 1 to 10, **characterized in that** the upper and lower tolerance limit (x_{To}, x_{Tu}) at an air spring bellows (2, 3, 6, 7) from the point at which said tolerance limit is exceeded, corrected upper and/or lower tolerance limits (x_{Tko}, X_{Tku}) are assigned to this air spring bellows (2, 3, 6, 7), is the same for all air spring bellows (2, 3, 6, 7).

12. The method according to any of claims 1 to 11, **characterized in that** the upper and lower tolerance limit at an air spring bellows from the point at which said tolerance limit is exceeded, corrected upper and/or lower tolerance limits are assigned to this air spring bellows, is different for all or some air spring bellows.

13. The method according to any of the preceding claims, **characterized in that** the value of the positive or negative deviation (Δx_o, Δx_u) of the actual level (xᵢₛₜ) from the target level (xₛₒₗₗ) at which a corrected upper and/or lower tolerance (x_{Tko}, X_{Tku}) is assigned to the associated air spring bellows (2, 3, 6, 7) lies within the value range of the uncorrected tolerance limits (x_{Tk}, x_{Tk}).

## Revendications

1. Procédé de réglage de niveau d'un véhicule à moteur à suspension pneumatique, par exemple d'un omnibus (50), qui présente un essieu avant (60) à suspension pneumatique et au moins un essieu arrière (70) à suspension pneumatique, et selon lequel plusieurs soufflets de suspension pneumatique (2, 3, 6, 7) disposés entre des éléments de châssis des essieux de véhicule (60, 70) et la carrosserie de véhicule (80, 80'), pour le réglage de leur niveau réel (xᵢₛₜ) à un niveau de consigne (xₛₒₗₗ) prédéfini, sont aérés par l'intermédiaire de soupapes de réglage de niveau (15, 16, 17, 18) réalisées sous la forme de soupapes de commutation, respectivement lors d'une non-atteinte d'une limite de tolérance inférieure (x_{T_u}) d'une bande de tolérance (ΔxT) et désaérés lors du dépassement d'une limite de tolérance supérieure (x_{T_o}) de la bande de tolérance (ΔxT), dans lequel, en présence d'un état de fonctionnement défini, au moins une des deux limites de tolérance (x_{T_u}, x_{T_o}) pour au moins un soufflet de suspension pneumatique (2, 3, 6, 7) d'au moins un essieu de véhicule (60, 70) ou d'un côté de véhicule (53, 54) est modifiée de manière adaptée, dans lequel la vitesse de marche et/ou l'état d'actionnement d'un frein de stationnement (63, 64, 73, 74) sont détectés par capteur, dans lequel ensuite, lorsque la vitesse de marche n'a pas atteint une vitesse de marche minimale pouvant être interprétée comme une immobilisation du véhicule et/ou que le frein de stationnement (63, 64, 73, 74) est actionné, le niveau réel (xᵢₛₜ) est mesuré dans la zone de chaque soufflet de suspension pneumatique (2, 3 ; 6, 7), dans lequel les valeurs de mesure des niveaux réels (xᵢₛₜ) sont comparées à la valeur prédéfinie pour le niveau de consigne (xₛₒₗₗ), dans lequel la valeur de niveau réel (xᵢₛₜ) d'un soufflet de suspension pneumatique (2, 3, 6, 7) qui présente le plus grand écart par rapport au niveau de consigne (xₛₒₗₗ) est déterminée, et dans lequel pour le soufflet de suspension pneumatique (2, 3 ; 6, 7) sur lequel le plus grand écart (Δx_o_t2) du niveau réel (xᵢₛₜ) par rapport au niveau de consigne (xₛₒₗₗ) a été établi, au sens d'une augmentation de la bande de tolérance (ΔxT), la limite de tolérance supérieure (x_{T_o}) de celle-ci est élevée à une limite de tolérance supérieure corrigée (x_{Tk_o}) et/ou la limite de tolérance inférieure (x_{T_u}) de celle-ci est abaissée à une limite de tolérance inférieure corrigée (x_{Tk_u}), **caractérisé en ce que**, pour le soufflet de suspension pneumatique (3) pour lequel une limite de tolérance supérieure (x_{T_o}) et/ou une limite de tolérance inférieure (x_{T_u}) a été modifiée à une limite de tolérance supérieure et/ou inférieure corrigée (x_{Tk_u}, x_{Tk_o}), lors d'un dépassement de cette limite de tolérance supérieure ou inférieure corrigée (x_{Tk_u}, x_{Tk_o}), le niveau réel (x_{ist'}) est à nouveau réglé sur une valeur qui se situe à l'intérieur de la bande de tolérance corrigée (ΔxTk) et à l'extérieur de la bande de tolérance non corrigée (ΔxT) pour ce soufflet de suspension pneumatique (3).

2. Procédé selon la revendication 1, **caractérisé en ce que** ce procédé est utilisé lors du fonctionnement d'un omnibus (50) avec au moins une porte de véhicule.

3. Procédé selon la revendication 2, **caractérisé en ce que**, lorsqu'une porte de véhicule (55) est ouverte, ce n'est pas le soufflet de suspension pneumatique (3) proche de cette porte de véhicule (55) qui se voit attribuer des limites de tolérance corrigées (x_{Tk_u}, x_{Tk_o}), bien qu'une valeur de niveau réel (x_{ist'}), qui se situe à l'extérieur des limites (x_{T_u}, x_{T_o}) de la bande de tolérance non corrigée (ΔxT), ait été déterminée sur celui-ci, mais le soufflet de suspension pneumatique (2) qui est disposé sur le même essieu de véhicule (60) sur le côté de véhicule (53) opposé.

4. Procédé selon la revendication 2, **caractérisé en ce que**, lorsqu'une porte de véhicule (55) est ouverte, ce n'est pas le soufflet de suspension pneumatique (3) proche de cette porte de véhicule (55) qui se voit attribuer des limites de tolérance corrigées (x_{Tk_u}, x_{Tk_o}), bien qu'une valeur de niveau réel (x_{ist'}), qui se situe à l'extérieur des limites (x_{T_u}, x_{T_o}) de la bande de tolérance non corrigée (ΔxT), ait été déterminée sur celui-ci, mais le soufflet de suspension pneumatique (2) qui est disposé sur l'autre essieu de véhicule (60) sur le côté de véhicule (53) opposé, par conséquent de manière diagonalement opposée.

5. Procédé selon la revendication 2, **caractérisé en ce que**, lorsqu'une porte de véhicule (55) est ouverte, ce n'est pas le soufflet de suspension pneumatique (3) proche de cette porte de véhicule (55) qui se voit attribuer des limites de tolérance corrigées (x_{Tk_u}, x_{Tk_o}), bien qu'une valeur de niveau réel (xᵢₛₜ), qui se situe à l'extérieur des limites (x_{T_u}, x_{T_o}) de la bande de tolérance non corrigée (ΔxT), ait été déterminée sur celui-ci, mais tous les soufflets de suspension pneumatique (2, 6) qui sont disposés sur le côté de véhicule (53) opposé.

6. Procédé selon l'une quelconque des revendications 2 à 5, **caractérisé en ce que** les limites de tolérance supérieure et/ou inférieure corrigées (x_{Tk_u}, x_{Tk_o}) concernées pour le soufflet de suspension pneumatique (3) disposé à proximité de la porte de véhicule (55) sont ramenées aux limites de tolérance supérieure et/ou inférieure non corrigées (x_{Tk}, x_{Tk}).

7. Procédé selon la revendication 6, **caractérisé en ce que** le fait de ramener aux limites de tolérance supérieure et/ou inférieure non corrigées (x_{Tk}, x_{Tk}) pour le soufflet de suspension pneumatique (3) disposé à proximité de la porte de véhicule (55) s'effectue avant qu'un réglage du niveau ait lieu.

8. Procédé selon l'une quelconque des revendications 3 à 7, **caractérisé en ce que** les limites de tolérance (x_{T_u}, x_{T_o}) concernées pour les soufflets de suspension pneumatique (2, 3) disposés sur l'essieu avant (60) ne sont modifiées de manière correspondante que lorsque la porte d'accès avant (55) du véhicule à moteur (50) est également effectivement ouverte.

9. Procédé selon l'une quelconque des revendications 1 à 8, **caractérisé en ce que** les mêmes limites de tolérance supérieure et/ou inférieure corrigées (x_{Tko}, X_{Tku}) sont attribuées à un soufflet de suspension pneumatique dont le niveau réel (xᵢₛₜ) dépasse la limite de tolérance supérieure ou inférieure non corrigée (x_{Tko}, X_{Tku}) qu'à chaque autre des soufflets de suspension pneumatique du véhicule, lorsque les limites de tolérance supérieure et/ou inférieure non corrigées (x_{Tko}, X_{Tku}) sont dépassées pour un de ces autres soufflets de suspension pneumatique.

10. Procédé selon l'une quelconque des revendications 1 à 8, **caractérisé en ce que** d'autres limites de tolérance supérieure et/ou inférieure corrigées (x_{Tko}, X_{Tku}) sont attribuées à un soufflet de suspension pneumatique dont le niveau réel (xᵢₛₜ) dépasse la limite de tolérance supérieure ou inférieure non corrigée (x_{Tko}, X_{Tku}) qu'à un ou à tous les autres soufflets de suspension pneumatique du véhicule, lorsque les limites de tolérance supérieure et/ou inférieure non corrigées (x_{Tko}, X_{Tku}) sont dépassées pour un de ces autres soufflets de suspension pneumatique.

11. Procédé selon l'une quelconque des revendications 1 à 10, **caractérisé en ce que** la limite de tolérance supérieure et l'inférieure (x_{To}, x_{Tu}) sur un soufflet de suspension pneumatique (2, 3, 6, 7), à partir du dépassement de laquelle des limites de tolérance supérieure et/ou inférieure corrigées (x_{Tko}, X_{Tku}) sont attribuées à ce soufflet de suspension pneumatique (2, 3, 6, 7), est identique pour tous les soufflets de suspension pneumatique (2, 3, 6, 7).

12. Procédé selon l'une quelconque des revendications 1 à 11, **caractérisé en ce que** la limite de tolérance supérieure et l'inférieure non corrigée sur un soufflet de suspension pneumatique, à partir du dépassement de laquelle des limites de tolérance supérieure et/ou inférieure corrigées sont attribuées à ce soufflet de suspension pneumatique, est différente pour tous les ou certains soufflets de suspension pneumatique.

13. Procédé selon l'une quelconque des revendications précédentes, **caractérisé en ce que** la valeur de l'écart positif ou négatif (Δx_o, Δx_u) du niveau réel (xᵢₛₜ) par rapport au niveau de consigne (xₛₒₗₗ), à partir de laquelle une limite de tolérance supérieure et/ou inférieure corrigée (x_{Tko}, X_{Tku}) est attribuée au soufflet de suspension pneumatique (2, 3, 6, 7) associé, se situe à l'intérieur de la plage de valeurs des limites de tolérance non corrigées (x_{Tk}, x_{Tk}).
